# EUROPEAN PATENT SPECIFICATION

(11) **EP 2 244 829 B1**
(45) Date of publication and mention of the grant of the patent: **28.11.2012**
(21) Application number: 08866284.6
(22) Date of filing: 09.12.2008
(51) Int. Cl.: B01J 21/06, C04B 35/48, C01G 25/02

(54) **PHASE STABLE METAL OXIDE ARTICLE AND PROCESS FOR MAKING THE SAME**
PHASENSTABILER METALLOXIDARTIKEL UND HERSTELLUNGSVERFAHREN DAFÜR
ARTICLE D'OXYDE MÉTALLIQUE EN PHASE STABLE ET SON PROCÉDÉ DE FABRICATION

(30) Priority: 27.12.2007 US 9243
(43) Date of publication of application: 03.11.2010
(73) Proprietor: Saint-Gobain Ceramics & Plastics Inc., Worcester, Massachusetts 01615-0138 (US)
(72) Inventor: DAHAR, Stephen, Solon Ohio 44139 (US); TE, Mure, Waltham, Massachusetts 02453 (US)
(74) Representative: Leidescher, Thomas
(86) International application number: PCT/US2008/086011
(87) International publication number: WO 2009/085589

(56) References cited:
- HUSSAIN S T ET AL: "Increase in Concentration and Strength of Acidic Catalytic Sites on Sulfated Zirconia by Doping with Silica" CHINESE JOURNAL OF CATALYSIS / DALIAN INSTITUTE OF CHEMICAL PHYSICS, ELSEVIER, AMSTERDAM, NL LNKD- DOI:10.1016/S1872-2067(07)60054-0, vol. 28, no. 7, 1 July 2007 (2007-07-01), pages 622-626, XP022857637 ISSN: 1872-2067 [retrieved on 2007-07-01]
- BARTHOS R ET AL: "A study of the acidic and catalytic properties of pure and sulfated zirconia-titania and zirconia-silica mixed oxides" TOPICS IN CATALYSIS, KLUWER ACADEMIC PUBLISHERS-PLENUM PUBLISHERS, NE, vol. 10, no. 1-2, 1 March 2000 (2000-03-01), pages 79-87, XP019291879 ISSN: 1572-9028
- YUNCHEN DU ET AL: "Ordered mesoporous sulfated silica-zirconia materials with high zirconium contents in the structure" JOURNAL OF POROUS MATERIALS, KLUWER ACADEMIC PUBLISHERS, BO LNKD- DOI:10.1007/S10934-006-7026-5, vol. 13, no. 2, 1 April 2006 (2006-04-01), pages 163-171, XP019212448 ISSN: 1573-4854
- YANG H ET AL: "Preparation, characterization and catalytic activity of sulfated zirconia-silica nanocrystalline catalysts" MATERIALS LETTERS, NORTH HOLLAND PUBLISHING COMPANY. AMSTERDAM, NL LNKD- DOI:10.1016/S0167-577X(02)01313-7, vol. 57, no. 16-17, 1 May 2003 (2003-05-01), pages 2572-2579, XP004418473 ISSN: 0167-577X

## Description

### BACKGROUND OF THE INVENTION

This invention relates to a shaped ceramic article and the process for making the same. More particularly, this invention pertains to a catalyst carrier made from a sulfated metal oxide such as sulfated zirconia.

Previous attempts to manufacture articles from zirconia or sulfated zirconia are disclosed in the following patents and published international patent applications. US 7,015,175, entitled High-Activity Isomerization Catalyst and Process, describes a catalyst comprising a support comprising a sulfated oxide or hydroxide of at least one of the elements of Group IVB (IUPAC 4) of the Periodic Table, a first component of at least one lanthanide element, and at least one platinum-group metal component which is preferably platinum and a refractory oxide binder having at least one platinum-group metal component dispersed thereon. US 5,269,990, entitled Preparation of Shaped Zirconia Particles, describes a method of making shaped zirconia particles by mixing zirconia powder with an aqueous colloidal zirconia solution or an aqueous acid solution so as to obtain a shapable mixture containing about 4-40 weight % water, shaping the mixture, and heating the shaped particles at a temperature in excess of about 90°C. WO 94/08914, entitled Shaped Articles of Zirconia, discloses a method of making a shaped green body that is suitable for firing to form a zirconia based article of a desired shape. The process includes mixing zirconium hydroxide and at least one binder that comprises a different zirconium compound which is thermally decomposable to zirconia. WO 2004/065002, entitled Zirconia Extrudates, is directed to a process for preparing calcined zirconia extrudate. The particulate zirconia comprises no more than 15% by weight of zirconia which is other than monoclinic zirconia.

### SUMMARY

Embodiments of the present invention provides a sulfated metal oxide article, such as a catalyst or support for a catalyst that may have a stable tetragonal crystalline phase and crush strength sufficient to resist crushing at pressures commonly experienced in chemical reactors that utilize a catalyst to facilitate desirable chemical reactions.

In one embodiment, a ceramic article comprises at least 90 weight percent zirconia, at least 2 weight percent sulfur and at least 2 weight percent silica measured as SiO₂. The article comprises a crystalline microstructure and at least 60 percent of the crystalline microstructure is tetragonal. The article has initial crush strength greater than 4 kg.

Embodiments may also relate to a process that may include the following steps. Mixing a quantity of an amorphous metal hydroxide powder comprising at least 2 weight silica, measured as SiO₂, with at least a first acidic compound comprising zirconium; a second acidic compound comprising sulfur, and a quantity of liquid, thereby forming a mixture. Forming the mixture into a shaped greenware article. Heating the shaped greenware article to a first temperature, which is the lowest temperature needed to thermally decompose the first compound and at least initiate conversion of the metal hydroxide's amorphous phase to a crystalline phase. Maintaining the temperature of the shaped article equal to or below a second temperature, which is the lowest temperature needed to sinter the article, until the amorphous metal hydroxide converts to a crystalline phase and at least 60 percent of the crystalline phase comprises a tetragonal crystalline microstructure. Heating the shaped article above the second temperature thereby forming a sintered ceramic article.

### BRIEF DESCRIPTION OF THE DRAWING

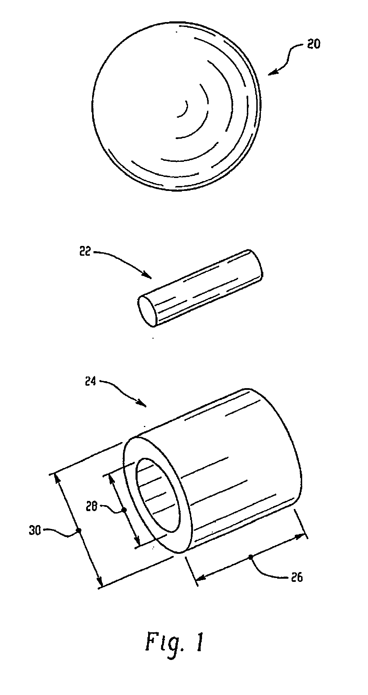

Fig. 1 discloses shapes of articles that may be manufactured by a process of this invention.

### DETAILED DESCRIPTION

Sulfated metal oxides have been used as catalysts and catalyst supports in hydrocarbon transformation chemical reactions that require the use of an acid type catalyst. Examples of such reactions include, for example, isomerization, alkylation, oligomerization or even light hydrocarbon dehydration and also heavier hydrocarbon cracking and hydroisomerization. Other types of reactions include esterification and transesterification. In many applications, the sulfated metal hydroxide powder itself may be used as the catalyst or as a support onto which a catalytically active material, such as palladium or platinum, may be deposited. However, this invention specifically benefits those applications that use formed, granular articles, which may be referred to herein as supports, carriers or catalysts. The carriers are made by mixing metal oxide powder comprising silica with other ingredients and then forming articles such as beads or pellets which are then heated to form the carrier. The carriers may be used in fixed bed reactors or fluidized bed reactors. In a fixed bed reactor, the carriers remain stationary while reactants are made to pass through the bed thereby flowing over and around the carriers. The carriers must be resistant to the crushing force that is inherently applied to the carriers at the bottom of the reactor by the carriers located in the middle and top portions of the reactor. In contrast, carriers in a fluidized bed are suspended in a liquid and gaseous reactants flow as bubbles through the liquid. As the carriers tumble through the liquid, they repeatedly contact each other and the interior surface of the reactor. Consequently, carriers used in fluidized bed reactors must be resistant to attrition which would physically degrade the carriers.

Shown in Fig. 1 are three examples of formed, porous ceramic carriers. First shape 20 is a generally spherical body. Second shape 22 is a rod shaped pellet. Third shape 24 is a tubular shaped body, also known as a ring, which has a length 26, a generally constant inside diameter 28 and a generally constant outside diameter 30. Any shape may be used that provides the desired crush strength, attrition resistance, pressure drop, and/or other properties for a given application. Processes used to produce the formed ceramic carriers according to embodiments of this invention include any process adapted to the formation of ceramic bodies from powders, such as: extrusion; pressing; pan agglomeration; oil drop and spray drying.

The physical characteristics of the ceramic articles, such as: a stable tetragonal crystalline phase; desirable surface area; adequate sulfate loading; porosity; and resistance to crushing may be important to the functioning of the articles as carriers. Although forming sulfated metal oxide carrier has been generally disclosed, there is a long standing problem with forming a carrier (1) that has sufficiently high initial crush strength and adequate strength maintenance, and (2) the sulfate loading remains properly attached to the carrier after repeated exposure to catalytic conditions experienced in a reactor. As used herein, strength maintenance is determined by dividing the crush strength of the carrier after exposure to 600°C for 75 hours by the same carrier's initial crush strength. Strength maintenance may be expressed as a percentage of the initial crush strength. In some sulfated zirconia catalysts that are not considered to represent an embodiment of this invention, the sulfate may not be properly bonded to the carrier thereby resulting in the degradation of the catalyst and the generation of dust after the catalyst has been exposed to an accelerated aging test for a brief period of time. If the sulfur containing compound on the carrier is separated from the carrier, the acidic properties of the catalyst system using this carrier may be too low to efficiently catalyze the desired reaction. In other catalyst that are not considered to be an embodiment of this invention, the sulfate may be properly secured to the carrier but the carrier may be easily crushed and therefore would not be able to withstand the weight of the other carriers located in the reactor and above the subject catalyst. If the catalyst cannot resist crushing to a minimum bed depth in a reactor, then the reactor cannot be loaded with the needed quantity of catalyst without crushing the catalyst at the bottom of the bed, typically leading to undesirable pressure drop within the bed. In yet other possible embodiments of known sulfated catalysts, the catalyst may suffer because the sulfate is not properly dispersed across the surface of the catalyst. Poor dispersion may reduce the efficiency of the catalyst relative to a catalyst that has sulfate loading properly dispersed on and secured to the carrier.

With regard to the catalyst's microstructure, the catalytic activity of the sulfated metal oxide may be improved if the sintered oxide's crystalline phase is the less thermodynamically stable tetragonal phase rather than the more stable monoclinic phase. Unfortunately, because the monoclinic form is more stable, the metal oxide prefers to convert from tetragonal to monoclinic during the carrier or catalyst manufacturing processes or after the catalyst has been formed and inserted into a chemical reactor and begun to function as a catalyst. Therefore, developing the ability to stabilize the tetragonal phase of formed sulfated zirconia has been a desirable goal for carrier manufacturers. The inventors of this application have discovered and applied the knowledge that the stability of the metal oxide's crystalline phase may be significantly improved, for example, by selecting the correct combination of additives to mix with the metal hydroxide powder during the carrier formation process. Furthermore, the stability of the metal oxide's crystalline phase may be improved by adding a form of silica to the metal hydroxide powder before mixing the metal hydroxide powder with the other ingredients. In particular embodiments, combining a silicated metal hydroxide powder with a combination of additives and then heating the formed articles in a manner that allows the metal oxide to convert to a crystalline phase and then convert at least 60 weight percent of the crystalline phase to tetragonal crystalline phase and then sintering the particles of powder to one another to form a carrier is one way to produce a carrier having the desired performance characteristics.

In particular embodiments, the microstructure of a carrier of this invention does not need to be 100% tetragonal in order to operate in an efficient manner within a reactor. Many carriers, including embodiments of the carriers of this invention, may be a mixture of amorphous and crystalline phases. Embodiments of a carrier of this invention may have at least 50 weight percent crystalline phase material which inherently limits the amount of amorphous phase material to no more than 50 weight percent based on the weight of the carrier. Furthermore, not all of the crystalline phase must be tetragonal. However, in order to provide an efficient carrier, at least 60 weight percent of the carrier's initial crystalline phase is generally desired to be tetragonal. A carrier's initial crystalline phase is determined after the carrier has been sintered and before the carrier is exposed to the operating conditions within a reactor.

A carrier's crystalline phase may be determined using a Philips X-ray Diffractometer which utilizes Philips X'Pert software and is equipped with a high efficiency X'Celerator detector. The scan range is 10-80 degrees 2 theta and the step size is 0.167 degrees 2 theta. When sulfated zirconia is the base material from which the catalyst is made, the weight percent of the tetragonal crystalline phase is determined by: (a) measuring the intensity at a d-spacing of 2.96 angstroms which is the tetragonal ZrO₂ peak; (b) measuring the intensities at a d-spacing of 3.16 angstroms and 2.84 angstroms which are the monoclinic ZrO₂ peaks; and then (c) dividing the intensity of the tetragonal peak by the sum of the intensities of the monoclinic peaks and the tetragonal peak. The intensity is determined by measuring the peak height (cps) and then subtracting out the background which is determined using the Treatment/Determine Background/Manual/Subtract options in the X'Pert software. The weight percentages of the sulfated zirconia's crystalline phases are determined after the ceramic body has been sintered and allowed to cool to room temperature, which is defined as 22°C. If a portion of the sulfated zirconia is amorphous, the amorphous portion is not considered when calculating the weight percent of the sulfated zirconia's crystalline phases. In one embodiment, at least 60 weight percent of the sulfated zirconia's crystalline phase is tetragonal. In another embodiment, at least 80 weight percent of the sulfated zirconia's crystalline phase is tetragonal. In yet another embodiment, at least 90 weight percent of the sulfated zirconia's crystalline phase is tetragonal.

One advantage of some embodiments of this invention may be the stability of the tetragonal phase after the catalyst is exposed to conventional processing conditions within a reactor. The stability of a catalyst's crystalline phase may be described herein as "phase maintenance" which is determined by dividing the weight percent of the catalyst's desired (i.e. tetragonal) crystalline phase after exposure to operating conditions in a reactor by the same catalyst's initial weight percent of the same crystalline phase. For example, if 60 weight percent of the carrier's initial crystalline phase was tetragonal and the carrier's percentage of tetragonal crystalline phrase dropped to 45 weight percent after use in a reactor, the carrier would be described as having a 75% phase maintenance which was determined by dividing 45 by 60. While 100% phase maintenance after prolonged use in a reactor may be desirable, many carriers, including embodiments of this invention, may convert from tetragonal to monoclinic during use in reactor. In particular uses, a carrier having tetragonal phase maintenance above 50 percent after exposure to 600°C for twenty hours may be economically viable. Carriers having at least 65 percent, 80 percent, 85 percent or even 90 percent tetragonal phase maintenance over such period may have even greater economic value.

Metal hydroxide powder suitable for forming carriers or catalysts according to embodiments of this invention, such as silicated zirconia, may be purchased from MEL Chemicals of Manchester, England. Silicated zirconia may be referred to herein as a doped metal hydroxide powder. In silicated zirconia, the silica is considered to be a dopant. For particular embodiments, the powder may have the following physical characteristics: an amorphous structure, which is determined by X-ray diffraction analysis; a BET surface area greater than about 350 m²/g, which is determined after outgassing the sample for two hours at 250°C; a total pore volume greater than about 0.3 cc/g; and an average pore size greater than about 4 nm. Typically, the powder's particle size distribution may have a d₅₀ between 1 and 5 microns, inclusive. A model TriStar 3000 analyzer may be used to determine the BET surface area and average pore size.

Embodiments of a carrier of this invention may be made using a single supply of doped zirconia powder having certain chemical and physical characteristics such as a silicated zirconia powder having a d₅₀ of approximately 1 micron. Alternatively, a carrier according to embodiments of this invention may be made from two or more distinct supplies of doped zirconia powder such as a first powder having a d₅₀ of approximately 1 micron and a second powder having a d₅₀ of approximately 5 microns. If two or more distinct powder supplies are mixed with one another to form the quantity of powder used to make an embodiment of this invention, each powder supply generally represents at least ten weight percent of the total weight of powder. In addition to differences in physical characteristics, the powders may also have different chemical characteristics. For example, a first powder, which may be described herein as a first portion, may be sulfated zirconia having a d₅₀ of approximately 1 micron, and a second powder, which may be described herein as a second portion, may be silicated zirconia having a d₅₀ of approximately 5 microns. If d₅₀ is a distinguishing characteristic between two powder supplies, the value of the smaller d₅₀ generally is at least 50 percent less than the value of the larger d₅₀. For example, if the larger d₅₀ is 20 microns, the smaller d₅₀ is generally less than 10 microns.

In particular embodiments, the additives include at least a first acidic compound that includes zirconium and a fluid having a pH less than 7.0. The acidic nature of the zirconium containing compound may be compatible with the acidic nature of the silicated metal hydroxide. The compatibility of the first acidic compound and the metal hydroxide may ultimately impact the crush strength and strength maintenance of the carrier which may be due to the influence of the acidic zirconium containing compound on the extrudeability of the mixture used to make the carrier. One role of the first acidic compound may be to function as a binder which facilitates adhesion of the metal hydroxide particles to each other during the extrusion process and early stage of the heating process. As the temperature of the heating process exceeds the decomposition temperature of the binder, the binder is decomposed and at least a portion of the by-products are removed from the carrier. A portion of the binder, such as the zirconium in the first acidic compound, may remain as a part of the carrier. Examples of suitable zirconium containing acidic binders include zirconium nitrate solution, zirconium acetate, zirconium orthosulfate, zirconium oxychloride, zirconium oxynitrate, zirconium chloride and zirconium sulfate.

In some embodiments, the additives may also include a second acidic compound that includes sulfur. An example of a suitable second acidic compound is sulfuric acid. The sulfur in the sulfuric acid could be used to either increase or provide the carrier's entire sulfate loading. The acidic nature of the second compound is generally desired to be compatible with the acidic nature of the first acidic compound and the metal hydroxide. The chemical compatibility of the binder, source of sulfur and metal hydroxide may impact the extrudeability of the mixture used to make the carrier and the crush strength and strength maintenance of the carrier. A commercially available source of acidic colloidal silica is Nalco 1034A which may be purchased from Nalco Company of Naperville, Illinois, USA.

An embodiment of a formed, ceramic article according to this invention that may be used as a catalyst or as a carrier for a catalyst has a crush strength of at least 4.0 kg when tested as described in ASTM D 4179 - 01 (Reapproved 2006) which is entitled Standard Test Method for Single Pellet Crush Strength of Formed Catalyst Shapes. This standard describes measuring a pellet's radial crush strength and the axial crush strength. As used herein, crush strength refers to axial crush strength.

In addition to crush strength, the carrier's surface area may be important to the functioning of the carrier in a reactor. "Surface area" as used herein is understood to relate to the surface area as determined by the B.E.T. (Brunauer-Emmet-Teller) method as described in Journal of American Chemical Society 60 (1938) pp. 309-316. The surface area may be determined using a model TriStar 3000 analyzer made by Micromeritics after outgassing the sample for two hours at 250°C. A carrier having a surface area greater than 125 m²/g is acceptable for typical applications. A carrier having even higher surface areas, such as 130 m²/g, 140 m²/g or even 150 m²/g, may be acceptable.

A process that may be used to produce embodiments of a carrier of this invention will now be described. First, mix a silicated zirconium hydroxide powder having an amorphous crystalline structure with: a first acidic compound comprising zirconium; a second acidic compound comprising sulfur; and a liquid to form a malleable mixture. If desired, additional components, such as a dispersant or extrusion agent, may be included in the mixture. Form the mixture into shaped articles. Suitable shapes are disclosed in Fig. 1. Heat the shaped articles above a first temperature which is the lowest temperature needed to thermally decompose the first and second acidic compounds and initiate conversion of the silicated amorphous zirconium hydroxide to the tetragonal crystalline phase. Then maintain the temperature of the shaped articles equal to or below a second temperature, which is the lowest temperature needed to sinter the articles, until the zirconium hydroxide converts to a crystalline phase and at least 60 percent of the crystalline phase is tetragonal. Then heat the shaped articles above the second temperature thereby forming sintered ceramic articles. While the times and temperatures at which the first heating step takes place may be adjusted to accommodate variations in the raw materials, the shape and/or physical dimensions of the formed articles, and/or the formula used to produce the mixture, embodiments of formed articles of this invention may be heated to a first temperature between 425°C and 475°C, such as between 450°C and 460°C, for at least 3 hours. Similarly, during the second heating step, the temperature of the articles may be between 500°C and 650°C. The temperature may be reached by increasing the temperature at a rate of 1°C to 5°C per minute from room temperature to the first temperature and at a rate of 1°C to 5°C per minute from the first temperature to the second temperature. Between the first and second heating steps, the temperature of the heated articles may be controlled by reducing the amount and/or rate at which heat is applied to the heated articles so that the temperature of the heated articles remains below the second temperature. Controlling the temperature of the heated articles may facilitate a physical conversion of the metal hydroxide from amorphous to tetragonal crystalline phase, achieving a desired surface area and improving the crush strength of the article.

Two carriers were produced as follows. The first example is a comparative example which describes using sulfated zirconium powders and then adding a source of silica during the carrier manufacturing process. The second example, which is a carrier of this invention, describes using a silicated zirconium powder and then adding sulfur during the carrier manufacturing process.

### Example No 1 (Comparative Example)

Shown in Table 1A are the ingredients that were used to make a comparative carrier.

**Table 1A**

| Ingredient No. | Quantity | Designation | Source |
|---|---|---|---|
| 1 | 1398 g | MEL XZO1248 | MEL Chemicals of Manchester, England |
| 2 | 1466 g | MEL XZO1249 | MEL Chemicals of Manchester, England |
| 3 | 30 g | Cellosize QP100MH | DOW Chemical Company of Midland, Michigan, USA |
| 4 | 30 g | UCARFLOC™ | DOW Chemical Company of Midland, Michigan, USA |
| 5 | 294 g | Nalco | Nalco Company of Naperville, Illinois, USA |
| 6 | 500 g | Zr(NO₃)₄ solution (20wt%) | Magnesium Elektron Inc. of Flemington, NJ, USA |
| 7 | 800 g | water | |

The first ingredient, 1398g of MEL XZO1248, is a sulfated, amorphous zirconium hydroxide powder (no silica added) that had a d₅₀ particle size of approximately 1 micron and a sulfate loading of 7.5 weight percent calculated as SO₃. The first ingredient may also be identified as the first portion of the sulfated zirconia powder. The second ingredient, 1466 g of MEL XZ01249, is a sulfated, amorphous zirconium hydroxide powder (no silica added) that had a d₅₀ particle size of approximately 5 microns and a sulfate loading of 7.5 weight percent calculated as SO₃. The second ingredient may also be identified as the second portion of the sulfated zirconia powder. The third ingredient, 30 g of Cellosize QP100MH, is an organic binder. The fourth ingredient, 30 g of UCARFLOC™, is polyethylene oxide that serves as an extrusion aid. The first four ingredients were disposed into a mixer and the ingredients were dry blended for sixty seconds thereby producing a dry blended mixture. The fifth ingredient, 294 g of Nalco, was added to the dry blended mixture by spraying onto the mixture while blending at high speed. The first five ingredients were mixed for three minutes. The sixth ingredient, 500 g of a 20 wt% Zr(NO₃)₄ solution, was added by spraying. The seventh ingredient, approximately 800 g of water, was added and the moistened mixture was then mixed at high speed to obtain the desired extrusion consistency. The mixture was then extruded through a die and cut at regular intervals thereby producing greenware pellets that were approximately 4 mm in diameter and approximately 8 mm long. The pellets were then air dried over night en masse and heated for sixteen hours at 80°C, then three hours at 150°C, then three hours at 460°C and then three hours at 600°C. The ramp rate for all stages of thermal increase was 5°C per minute. Table 1B shows the weight percent tetragonal, weight percent sulfur and surface area for carrier made according to the description in Example 1 after aging at 600°C for 0, 20, 50 and 75 hours, respectively.

**Table 1B**

| Time at 600°C | % Tetragonal | Wt % S | Surface Area (m²/g) |
|---|---|---|---|
| 0 | 73 | 3.4 | 145 |
| 20 | 40 | 2.5 | 104 |
| 50 | 30 | 2.4 | 89 |
| 75 | 20 | 2.1 | 93 |

Example No 2 (An embodiment of this invention.) Shown in Table 2A are the ingredients that were used to make a second embodiment of a carrier of this invention.

**Table 2A**

| Ingredient No. | Quantity | Designation | Source |
|---|---|---|---|
| 1 | 900 g | MEL XZO1520 | MEL Chemicals of Manchester, England |
| 2 | 854 g | MEL XZO1521 | MEL Chemicals of Manchester, England |
| 3 | 22.5 g | Cellosize QP100MH | DOW Chemical Company of Midland, Michigan, USA |
| 4 | 22.5 g | UCARFLOC™ | DOW Chemical Company of Midland, Michigan, USA |
| 5 | 375 g | H₂SO₄ (2.5M) | |
| 6 | 375 g | Zr(NO₃)₄ solution (20wt%) | Magnesium Elektron Inc. of Flemington, NJ, USA |
| 7 | 200 g | water | |

The first ingredient, 900g ofMEL XZO1520, is a silicated, amorphous zirconium hydroxide powder that had a d₅₀ particle size of approximately 1 micron and a 3.2 weight percent silica loading. The second ingredient, 854 g of MEL XZ01521, is a silicated, amorphous zirconium hydroxide powder that had a d₅₀ particle size of approximately 5 microns and a 3.2 weight percent silica loading. The third ingredient, 22.5 g of Cellosize QP100MH, is an organic binder. The fourth ingredient, 22.5 g of UCARFLOC™, is polyethylene oxide that serves as an extrusion aid. The first four ingredients were disposed into a mixer and the ingredients were dry blended for sixty seconds thereby producing a dry blended mixture. The fifth ingredient, 375 g of 2.5M H₂SO₄, was added to the dry blended mixture by spraying the sulfuric acid onto the mixture while blending at high speed. The first five ingredients were mixed for five minutes. The sixth ingredient, 375 g of a 20wt% Zr(NO₃)₄ solution, was added by spraying. The seventh ingredient, approximately 200 g of water, was added and the moistened mixture was then mixed at high speed to obtain the desired extrusion consistency. The mixture was then extruded through a die and cut at regular intervals thereby producing greenware pellets that were approximately 4 mm in diameter and approximately 8 mm long. The pellets were then air dried over night en masse and heated for sixteen hours at 80°C, then three hours at 150°C, then three hours at 460°C and then three hours at 600°C. The ramp rate for all stages of thermal increase was 5°C per minute. Table 2B shows the weight percent tetragonal, weight percent sulfur and surface area for carrier made according to the description in Example 2 after aging at 600°C for 0, 20, 50 and 75 hours, respectively.

**Table 2B**

| Time at 600°C | % Tetragonal | Wt % S | Surface Area (m²/g) |
|---|---|---|---|
| 0 | 100 | 2.8 | 142 |
| 20 | 100 | 2.7 | 118 |
| 50 | 83 | 2.4 | 107 |
| 75 | 88 | 2.1 | 105 |

The data in tables 1B and 2B demonstrate that carrier made with zirconium hydroxide powder comprising a phase stabilizing amount of silica and an acidic zirconium nitrate solution provided a carrier with greater than 80 percent phase maintenance after exposure to 600°C for 75 hours.

The above description is considered that of exemplary embodiments only. Modifications of the invention will occur to those skilled in the art and to those who make or use the invention. Therefore, it is understood that the embodiments described above are merely for illustrative purposes and are not intended to limit the scope of the invention, which is defined by the following claims as interpreted according to the principles of patent law.

## Claims

1. A ceramic article, comprising: at least 90 weight percent zirconia; at least 2 weight percent sulfur and at least 2 weight percent silica measured as SiO₂; wherein said article comprises a crystalline microstructure and at least 60 percent of said crystalline microstructure is tetragonal; said article has an initial crush strength greater than 4 kg and, after exposure to 600°C for 75 hours, said article has phase maintenance greater than 80%.

2. The ceramic article of claim 1 wherein said crush strength exceeds 7 kg.

3. The ceramic article of claim 1 wherein said crush strength exceeds 10 kg.

4. The ceramic article of claim 1 wherein said article has at least 85% phase maintenance after exposure to 600°C for 75 hours.

5. The ceramic article of claim 1 further comprising a surface area greater than 125 m²/g.

6. The ceramic article of claim 1 wherein said article's crystalline microstructure is at least 80% tetragonal.

7. The ceramic article of claim 1 wherein said article's crystalline microstructure is at least 90% tetragonal.

8. A process, for manufacturing a sintered ceramic article, comprising the steps of:
a. mixing a quantity of an amorphous zirconium hydroxide powder comprising at least 2 weight percent silica, measured as SiO₂, with at least: a first acidic compound comprising zirconium; a second acidic compound comprising sulfur; and a quantity of liquid, thereby forming a mixture;
b. forming said mixture into a shaped greenware article; and
c. heating said shaped greenware article to a first temperature, which is the lowest temperature needed to thermally decompose said first compound and at least initiate conversion of the zirconium hydroxide's amorphous phase to a crystalline phase; then maintaining the temperature of the shaped article equal to or below a second temperature, which is the lowest temperature needed to sinter said article, until said amorphous zirconium hydroxide converts to a crystalline phase and at least 60 percent of said crystalline phase is a tetragonal crystalline microstructure; and then heating the shaped article above said second temperature thereby forming a sintered ceramic article.

9. The process of claim 8 wherein said first temperature exceeds 400°C and does not exceed 475°C.

10. The process of claim 8 wherein said second temperature exceeds 500°.

11. The process of claim 8 wherein step c comprises heating said article until at least 80% of said article's crystalline phase is tetragonal.

12. The process of claim 8 wherein step c comprises heating said article until at least 90% of said article's crystalline phase is tetragonal.

13. The process of claim 8 wherein said first acidic compound comprises at least one compound selected from the group consisting of zirconium nitrate solution, zirconium acetate, zirconium orthosulfate, zirconium oxychloride, zirconium oxynitrate, zirconium chloride and zirconium sulfate.

14. The process of claim 8 wherein, prior to step a, said process further comprises the step of mixing at least a first portion of metal hydroxide powder with a second portion of metal hydroxide powder, said first and second portions each representing at least 10 weight percent of said metal hydroxide's total weight and said first portion's particle size distribution has a d₅₀ at least 50 percent less than said second portion's d₅₀.

15. The process of claim 8 wherein said liquid has a pH less than 7.0.

16. The process of claim 15 wherein said liquid comprises sulfuric acid.

17. The process of claim 8 wherein said shaped article has crush strength greater than 4 kg.

## Patentansprüche

1. Keramikartikel, umfassend: mindestens 90 Gewichtsprozent Zirkoniumdioxid; mindestens 2 Gewichtsprozent Schwefel und mindestens 2 Gewichtsprozent Siliciumdioxid, als SiO₂ gemessen; wobei der Artikel eine kristalline Mikrostruktur umfasst und mindestens 60 Prozent der kristallinen Mikrostruktur tetragonal sind; wobei der Artikel eine anfängliche Zerdrückfestigkeit von über 4 kg aufweist und der Artikel nach 75 Stunden langem Aussetzen an 600°C eine Phasenerhaltung von über 80 % aufweist.

2. Keramikartikel nach Anspruch 1, wobei die Zerdrückfestigkeit 7 kg übersteigt.

3. Keramikartikel nach Anspruch 1, wobei die Zerdrückfestigkeit 10 kg übersteigt.

4. Keramikartikel nach Anspruch 1, wobei der Artikel mindestens 85 % Phasenerhaltung nach 75 Stunden langem Aussetzen an 600°C aufweist.

5. Keramikartikel nach Anspruch 1, des Weiteren einen Oberflächenbereich von mehr als 125 m²/g aufweisend.

6. Keramikartikel nach Anspruch 1, wobei die kristalline Mikrostruktur des Artikels zu mindestens 80 % tetragonal ist.

7. Keramikartikel nach Anspruch 1, wobei die kristalline Mikrostruktur des Artikels zu mindestens 90 % tetragonal ist.

8. Verfahren zur Herstellung eines gesinterten Keramikartikels, umfassend die Schritte des:
a. Mischens einer Menge eines amorphen Zirkoniumhydroxidpulvers umfassend mindestens 2 Gewichtsprozent Siliciumdioxid, als SiO₂ gemessen, mit mindestens: einer ersten sauren Verbindung umfassend Zirkonium; einer zweiten sauren Verbindung umfassend Schwefel; und einer Menge Flüssigkeit, wodurch eine Mischung gebildet wird;
b. Formens der Mischung zu einem gestalteten Rohwarenartikel; und
c. Erhitzens des gestalteten Rohwarenartikels auf eine erste Temperatur, die die niedrigste Temperatur ist, die zum thermischen Zersetzen der ersten Verbindung und zumindest zum Einleiten der Umwandlung der amorphen Phase des Zirkoniumhydroxids zu einer kristallinen Phase erforderlich ist; daraufhin des Aufrechterhaltens der Temperatur des gestalteten Artikels gleich oder unterhalb einer zweiten Temperatur, die die niedrigste Temperatur ist, die zum Sintern des Artikels erforderlich ist, bis das amorphe Zirkoniumhydroxid zu einer kristallinen Phase umgewandelt wird und mindestens 60 Prozent der kristallinen Phase eine tetragonale kristalline Mikrostruktur aufweisen; und daraufhin des Erhitzens des gestalteten Artikels auf eine Temperatur über der zweiten Temperatur, wodurch ein gesinterter Keramikartikel gebildet wird.

9. Verfahren nach Anspruch 8, wobei die erste Temperatur 400°C übersteigt, aber 475°C nicht übersteigt.

10. Verfahren nach Anspruch 8, wobei die zweite Temperatur 500°C übersteigt.

11. Verfahren nach Anspruch 8, wobei Schritt c das Erhitzen des Artikels umfasst, bis mindestens 80 % der kristallinen Phase des Artikels tetragonal sind.

12. Verfahren nach Anspruch 8, wobei Schritt c das Erhitzen des Artikels umfasst, bis mindestens 90 % der kristallinen Phase des Artikels tetragonal sind.

13. Verfahren nach Anspruch 8, wobei die erste saure Verbindung mindestens eine Verbindung umfasst ausgewählt aus der Gruppe bestehend aus Zirkoniumnitratlösung, Zirkoniumacetat, Zirkoniumorthosulfat, Zirkoniumoxychlorid, Zirkoniumoxynitrat, Zirkoniumchlorid und Zirkoniumsulfat.

14. Verfahren nach Anspruch 8, wobei vor Schritt a das Verfahren des Weiteren den Schritt des Mischens mindestens eines ersten Teils von Metallhydroxidpulver mit einem zweiten Teil von Metallhydroxidpulver umfasst, wobei die ersten und zweiten Teile jeweils mindestens 10 Gewichtsprozent des Gesamtgewichts des Metallhydroxids darstellen und die Teilchengrößenverteilung des ersten Teils einen d₅₀-Wert von mindestens 50 Prozent unterhalb des d₅₀-Werts des zweiten Teils aufweist.

15. Verfahren nach Anspruch 8, wobei die Flüssigkeit einen pH-Wert von weniger als 7,0 aufweist.

16. Verfahren nach Anspruch 15, wobei die Flüssigkeit Schwefelsäure umfasst.

17. Verfahren nach Anspruch 8, wobei der gestaltete Artikel eine Zerdrückfestigkeit von mehr als 4 kg aufweist.

## Revendications

1. Article en céramique, comprenant au moins 90 pour cent en poids de zircone, au moins 2 pour cent en poids de soufre et au moins 2 pour cent en poids de silice mesurée en SiO₂, ledit article comprenant une microstructure cristalline et au moins 60 pour cent de ladite microstructure cristalline étant quadratique, ledit article possédant une résistance initiale à l'écrasement supérieure à 4 kg, et après exposition à 600 °C pendant 75 heures, ledit article présentant un maintien de phase supérieur à 80 %.

2. Article en céramique selon la revendication 1 dans lequel ladite résistance à l'écrasement dépasse 7 kg.

3. Article en céramique selon la revendication 1 dans lequel ladite résistance à l'écrasement dépasse 10 kg.

4. Article en céramique selon la revendication 1, ledit article présentant un maintien de phase d'au moins 85 % après exposition à 600 °C pendant 75 heures.

5. Article en céramique selon la revendication 1 présentant en outre une surface spécifique supérieure à 125 m²/g.

6. Article en céramique selon la revendication 1, ladite microstructure cristalline de l'article étant pour au moins 80 % quadratique.

7. Article en céramique selon la revendication 1, ladite microstructure cristalline de l'article étant pour au moins 90 % quadratique.

8. Procédé de fabrication d'un article en céramique frittée, comprenant les étapes consistant à :
a. mélanger une quantité d'une poudre d'hydroxyde de zirconium amorphe comprenant au moins 2 pour cent en poids de silice mesurée en SiO₂ avec au moins un premier composé acide comprenant du zirconium, un deuxième composé acide comprenant du soufre, et une quantité de liquide, pour former ainsi un mélange ;
b. transformer ledit mélange en un article façonné cru ; et
c. chauffer ledit article façonné cru jusqu'à une première température qui est la température la plus basse nécessaire pour décomposer thermiquement ledit premier composé et au moins initier la conversion de la phase amorphe d'hydroxyde de zirconium en une phase cristalline, puis maintenir la température de l'article façonné égale ou inférieure à une deuxième température qui est la température la plus basse nécessaire pour fritter ledit article, jusqu'à ce que ledit hydroxyde de zirconium amorphe se transforme en une phase cristalline et au moins 60 pour cent de ladite phase cristalline soit une microstructure cristalline quadratique, puis chauffer l'article façonné au-dessus de ladite deuxième température pour former ainsi un article en céramique frittée.

9. Procédé selon la revendication 8 dans lequel ladite première température dépasse 400 °C et ne dépasse pas 475 °C.

10. Procédé selon la revendication 8 dans lequel ladite deuxième température dépasse 500°.

11. Procédé selon la revendication 8 dans lequel l'étape c comprend le chauffage dudit article jusqu'à ce qu'au moins 80 % de ladite phase cristalline de l'article soit quadratique.

12. Procédé selon la revendication 8 dans lequel l'étape c comprend le chauffage dudit article jusqu'à ce qu'au moins 90 % de ladite phase cristalline de l'article soit quadratique.

13. Procédé selon la revendication 8 dans lequel ledit premier composé acide comprend au moins un composé choisi dans le groupe constitué par le nitrate de zirconium en solution, l'acétate de zirconium, l'orthosulfate de zirconium, l'oxychlorure de zirconium, l'oxynitrate de zirconium, le chlorure de zirconium et le sulfate de zirconium.

14. Procédé selon la revendication 8, ledit procédé comprenant en outre, avant l'étape a, une étape consistant à mélanger au moins une première partie de poudre d'hydroxyde métallique avec une deuxième partie de poudre d'hydroxyde métallique, lesdites première et deuxième parties représentant chacune au moins 10 pour cent en poids du poids total dudit hydroxyde métallique, et la distribution de taille de particules de ladite première partie ayant une d₅₀ inférieure d'au moins 50 pour cent à la d₅₀ de ladite deuxième partie.

15. Procédé selon la revendication 8 dans lequel ledit liquide a un pH inférieur à 7,0.

16. Procédé selon la revendication 15 dans lequel ledit liquide comprend de l'acide sulfurique.

17. Procédé selon la revendication 8 dans lequel ledit article façonné possède une résistance à l'écrasement supérieure à 4 kg.
